# EUROPEAN PATENT SPECIFICATION

(11) **EP 4 029 707 B1**
(45) Date of publication and mention of the grant of the patent: **12.03.2025**
(21) Application number: 22151687.5
(22) Date of filing: 14.01.2022
(51) Int. Cl.: B60C 23/04, B60C 23/06

(54) **SYSTEM AND METHOD FOR AUTO-LOCATION OF TIRES**
SYSTEM UND VERFAHREN ZUR SELBSTORTUNG VON REIFEN
SYSTÈME ET PROCÉDÉ D'AUTO-LOCALISATION DE PNEUMATIQUES

(30) Priority: 18.01.2021 US 202117151310
(43) Date of publication of application: 20.07.2022
(73) Proprietor: The Goodyear Tire & Rubber Company, Akron, OH 44316 (US)
(72) Inventor: SINGH, Kanwar Bharat, L-7363 Lorentzweiler (LU); SHARMA, Sparsh, L-1610 Luxembourg (LU)
(74) Representative: Kutsch, Bernd

(56) References cited:
- DE-A1- 102009 057 577
- DE-A1- 102014 204 862
- DE-B3- 102008 046 271
- US-A1- 2016 129 736

## Description

### Field of the Invention

The invention relates generally to tire monitoring systems. More particularly, the invention relates to systems and methods that include sensors mounted on vehicle tires to measure tire parameters. Specifically, the invention is directed to a system and a method for locating the position of a tire on a vehicle employing footprint length as measured by a sensor mounted on the tire.

### Background of the Invention

Sensors have been mounted on vehicle tires to monitor certain tire parameters, such as pressure and temperature. Systems that include sensors which monitor tire pressure are known in the art as tire pressure monitoring systems (TPMS). For example, a tire may have a TPMS sensor that transmits a pressure signal to a processor, which generates a low pressure warning when the pressure of the tire falls below a predetermined threshold. It is desirable that systems including pressure sensors be capable of identifying the specific tire that is experiencing low air pressure, rather than merely alerting the vehicle operator or a fleet manager that one of the vehicle tires is low in pressure.

The process of identifying which sensor sent a particular signal and, therefore, which tire may have low pressure, is referred to as auto-location or localization. Effective and efficient auto-location or localization is a challenge in TPMS, as tires may be replaced, rotated, and/or changed between summer and winter tires, altering the position of each tire on the vehicle. Additionally, power constraints typically make frequent communications and auto-location or localization of signal transmissions impractical.

Prior art techniques to achieve signal auto-location or localization have included various approaches. For example, low frequency (LF) transmitters have been installed in the vicinity of each wheel of the tire, two-axis acceleration sensors have been employed which recognize a rotation direction of the tire for left or right tire location determination, as well as methods distinguishing front tires from rear tires using radio frequency (RF) signal strength. The prior art techniques have deficiencies that make location of a sensor mounted in a tire on a vehicle either expensive or susceptible to inaccuracies.

As a result, there is a need in the art for a system that provides economical and accurate identification of the location of a position of a tire on a vehicle.

DE 10 2008 046 271 B3 and DE 10 2009 057 577 A1 describe an auto-location system for locating a position of a tire supporting a vehicle comprising a sensor unit that may be mounted on the tire and that may determine a footprint length. The system also employs the footprint length to determine the position of the tire on the vehicle. Furthermore, there is an output block executed on a processor for generating a message correlating the sensor unit to the position of the tire on the vehicle.

Further tire or wheel localization systems and methods are described in DE 10 2014 204 862 A1 and US 2016/0129736 A1.

### Summary of the Invention

The invention relates to an auto-location system in accordance with claim 1, to a use of such a system in accordance with claim 13, and to a method in accordance with claim 14.

Dependent claims refer to preferred embodiments of the invention.

According to an aspect of an exemplary embodiment of the invention, an auto-location system for locating a position of a tire supporting a vehicle is provided. The system includes a sensor unit that is mounted on the tire, and which includes a footprint length measurement sensor to measure a length of a footprint of the tire. A processor is in electronic communication with the sensor unit and receives the measured footprint length. A driving event classifier is executed on the processor and employs the measured footprint length to determine the position of the tire on the vehicle. An auto-location output block is executed on the processor and receives the determined position of the tire on the vehicle and generates a message correlating the sensor unit to the position of the tire on the vehicle.

In a preferred aspect of the invention, the driving event classifier is configured to determine from parameters sensed by the sensor unit whether the vehicle is executing a turn, and if the vehicle is executing a turn (which may be a right turn or a left turn), to input the determined mean footprint length into a turn-based auto-locator when a predetermined number of turn events has been met. Preferably, a left tire position is distinguished from a right tire position in the turn-based locator using a change from the determined mean footprint length. Preferably, a left tire position is distinguished from a right tire position in the right turn-based auto-locator using a speed difference between a wheel revolution time and a speed of the vehicle.

### Brief Description of the Drawings

The invention will be described by way of example and with reference to the accompanying drawings, in which:
Figure 1 is a schematic perspective view of a vehicle that includes a tire employing an exemplary embodiment of the auto-location system of the present invention;
Figure 2 is a plan view of a footprint of the tire shown in Figure 1;
Figure 3A is a schematic diagram of aspects of an exemplary embodiment of the auto-location system of the present invention;
Figure 3B is a schematic diagram of an aspect of the system shown in Figure 3A;
Figure 3C is a schematic diagram of another aspect of the system shown in Figure 3A;
Figure 3D is a schematic diagram of another aspect of the system shown in Figure 3A;
Figure 3E is a schematic diagram of another aspect of the system shown in Figure 3A;
Figure 3F is a schematic diagram of another aspect of the system shown in Figure 3A;
Figure 3G is a schematic diagram of another aspect of the system shown in Figure 3A; and
Figure 3H is a schematic diagram of another aspect of the system shown in Figure 3A.

Similar numerals refer to similar parts throughout the drawings.

### Definitions

"ANN" or "artificial neural network" is an adaptive tool for non-linear statistical data modeling that changes its structure based on external or internal information that flows through a network during a learning phase. ANN neural networks are non-linear statistical data modeling tools used to model complex relationships between inputs and outputs or to find patterns in data.

"Axial" and "axially" means lines or directions that are parallel to the axis of rotation of the tire.

"CAN bus" is an abbreviation for controller area network.

"Circumferential" means lines or directions extending along the perimeter of the surface of the annular tread perpendicular to the axial direction.

"Equatorial centerplane (CP)" means the plane perpendicular to the tire's axis of rotation and passing through the center of the tread.

"Footprint" means the contact patch or area of contact created by the tire tread with a flat surface as the tire rotates or rolls.

"Inboard side" means the side of the tire nearest the vehicle when the tire is mounted on a wheel and the wheel is mounted on the vehicle.

"Lateral" means an axial direction.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Tread element" or "traction element" means a rib or a block element defined by a shape having adjacent grooves.

### Detailed Description of Preferred Embodiments of the Invention

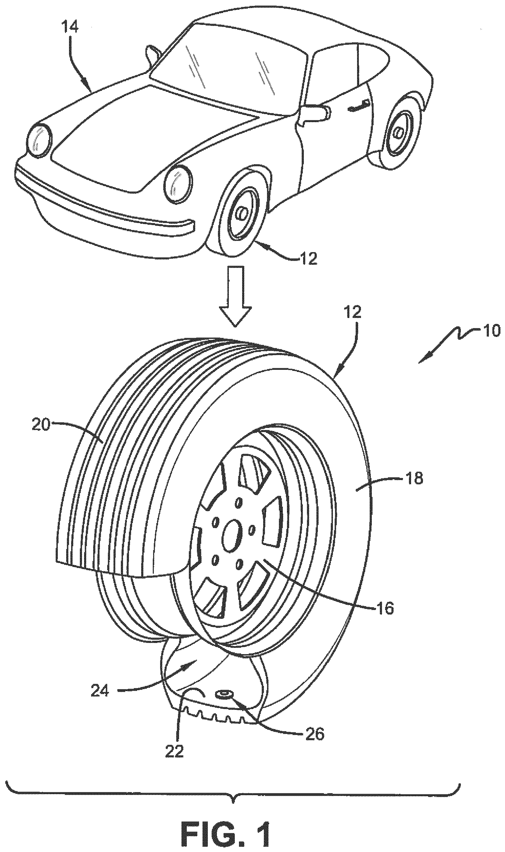

With reference to Figures 1 through 3H, an exemplary embodiment of an auto-location system 10 of the present invention is presented. With particular reference to Figure 1, the system 10 locates the position of each tire 12 supporting a vehicle 14. The position of each tire 12 shall be referred to herein by way of example as left front 12a, right front 12b, left rear 12c, and right rear 12d. While the vehicle 14 is depicted as a passenger car, the invention is not to be so restricted. The principles of the invention find application in other vehicle categories, such as commercial trucks, in which vehicles may be supported by more or fewer tires than those shown in Figure 1.

The tires 12 are preferably of conventional construction, and each tire is mounted on a respective wheel 16 as known to those skilled in the art. Each tire 12 includes a pair of sidewalls 18 (only one shown) that extend to a circumferential tread 20. An innerliner 22 is disposed on the inner surface of the tire 12, and when the tire is mounted on the wheel 16, an internal cavity 24 is formed, which is filled with a pressurized fluid, such as air.

A sensor unit 26 is attached to the innerliner 22 of each tire 12 by means such as an adhesive, and measures certain parameters or conditions of the tire as will be described in greater detail below. It is to be understood that the sensor unit 26 may be attached in such a manner, or to other components of the tire 12, such as on or in one of the sidewalls 18, on or in the tread 20, on the wheel 16, and/or a combination thereof. For the purpose of convenience, reference herein shall be made to mounting of the sensor unit 26 on the tire 12, with the understanding that such mounting includes all such types of attachment.

The sensor unit 26 is mounted on each tire 12 for the purpose of detecting certain real-time tire parameters, such as tire pressure 34 and tire temperature 36. For this reason, the sensor unit 26 preferably includes a pressure sensor and a temperature sensor and may be of any known configuration. The sensor unit 26 may be referred to as a tire pressure monitoring system (TPMS) sensor. The sensor unit 26 preferably also includes electronic memory capacity for storing identification (ID) information for the sensor unit mounted in each tire 12, known as sensor ID information, which includes a unique identifying number or code for each sensor unit.

The electronic memory capacity in the sensor unit may also store ID information for each tire 12, known as tire ID information. Alternatively, tire ID information may be included in another sensor unit, or in a separate tire ID storage medium, such as a tire ID tag, which preferably is in electronic communication with the sensor unit 26. The tire ID information may be correlated to specific construction data for each tire 12, including: the tire type; tire model; size information, such as rim size, width, and outer diameter; manufacturing location; manufacturing date; a treadcap code that includes or correlates to a compound identification; and a mold code that includes or correlates to a tread structure identification.

As described above, the phrases sensor ID and sensor ID information refer to identification of the tire-mounted sensor unit 26. The system 10 employs sensor ID and sensor ID information to identify each sensor unit 26, and analyses data from each sensor unit to determine the location of each respective tire 12 on the vehicle 14, as will be described in detail below. In the art, the phrase tire ID is sometimes used in connection with identification of the location of each tire 12 on the vehicle 14. However, as described above, the phrases tire ID and tire ID information as used herein refer to specific construction data for each tire 12, rather than locating the position of each tire on the vehicle 14.

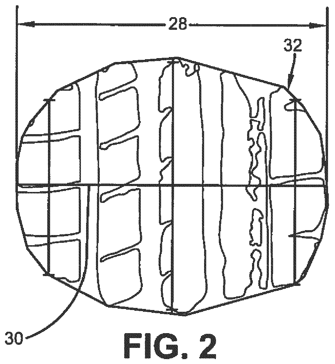

Turning to Figure 2, the sensor unit 26 (Figure 1) preferably also measures a length 28 of a centerline 30 of a footprint 32 of the tire 12. More particularly, as the tire 12 contacts the ground, the area of contact created by the tread 20 with the ground is known as the footprint 32. The centerline 30 of the footprint 32 corresponds to the equatorial centerplane of the tire 12, which is the plane that is perpendicular to the axis of rotation of the tire and which passes through the center of the tread 20. The sensor unit 26 thus measures the length 28 of the centerline 30 of the tire footprint 32, which is referred to herein as the footprint length 28. Any suitable technique for measuring the footprint length 28 may be employed by the sensor unit 26. For example, the sensor unit 26 may include a strain sensor or piezoelectric sensor that measures deformation of the tread 20 and thus indicates the footprint length 28.

The sensor unit 26 may also include an accelerometer for measuring wheel acceleration 38, and a revolution counter to measure wheel revolution time 40. It is to be understood that the pressure sensor, the temperature sensor, the sensor ID capacity, the tire ID capacity, the footprint length sensor, the accelerometer, and/or the revolution counter may be incorporated into the single sensor unit 26, or may be incorporated into multiple units. For the purpose of convenience, reference herein shall be made to a single sensor unit 26.

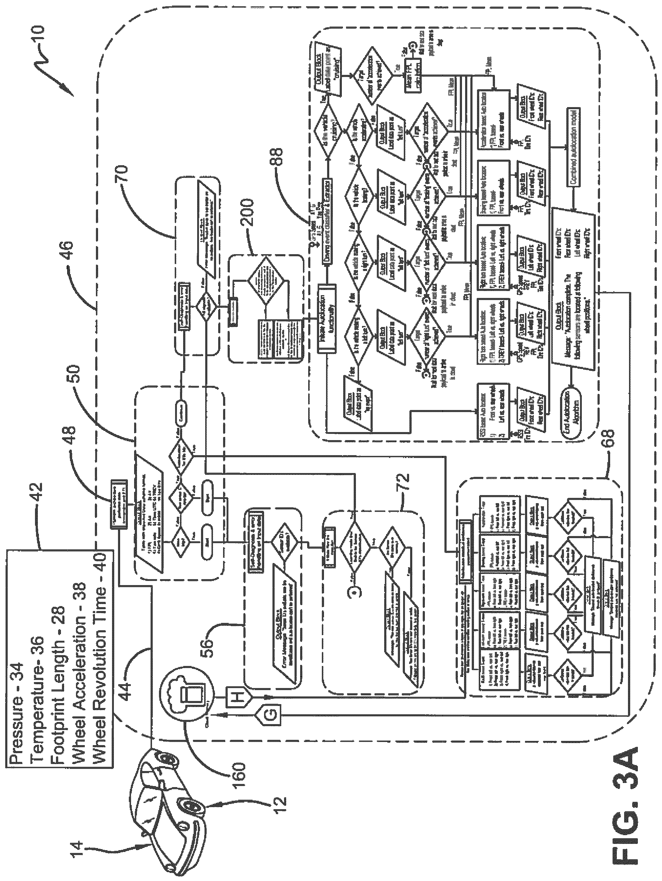

With reference to Figure 3A, the parameters of tire pressure 34, tire temperature 36, footprint length 28, the wheel acceleration 38, and the wheel revolution time 40 are collectively referred to as sensed parameters 42. The sensor unit 26 includes wireless transmission means 44, such as an antenna, for wirelessly sending the sensed parameters 42 to a processor 46. The processor 46 may be integrated into the sensor unit 26, or may be a remote processor, which may be mounted on the vehicle 14 or be cloud-based. For the purpose of convenience, the processor 46 will be described as a cloud-based processor, with the understanding that the processor may alternatively be integrated into the sensor unit 26 or mounted on the vehicle 14.

Aspects of the auto-location system 10 preferably are executed on the processor 46, which enables input of the sensed parameters 42 and execution of specific analysis techniques, to be described below, which are stored in a suitable storage medium and are also in electronic communication with the processor. For preliminary treatment, the sensed parameters 26 are input into a data converter 48, which processes and normalizes the data from the sensed parameters for analysis.

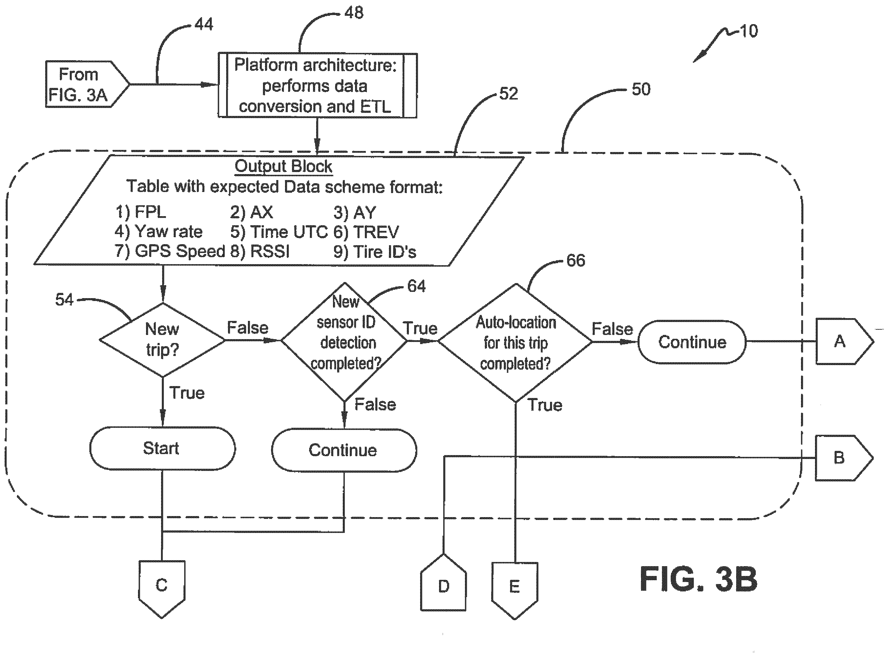

Turning to Figure 3B, after the data converter 48, output data 52 from the sensed parameters 26 are analyzed by an initial assessment module 50 to determine if the incoming data is for an ongoing trip, or if a new trip by the vehicle 14 is in progress 54. The output data 52 may include, by way of example, tire footprint length 28, lateral acceleration of the vehicle 14, longitudinal acceleration of the vehicle, yaw rate of the vehicle, a time stamp, a revolution time of the tire 12, a vehicle speed from a global positioning system (GPS), a received signal strength indication (RSSI) from each sensor unit 26, and/or sensor ID information.

If the data 52 from the sensed parameters 26 indicates that a new trip by the vehicle 14 is in progress, the system 10 proceeds to an initial system diagnosis module 56. If the data 52 from the sensed parameters 26 indicates that a new trip by the vehicle 14 is not in progress, an ongoing trip is in progress, and the data is reviewed to determine if new sensor ID detection has been completed 64. If the new sensor ID detection has not been completed, the system 10 again proceeds to the initial system diagnosis module 56. If the new sensor ID detection has been completed, the assessment module determines if auto-location for the current trip of the vehicle 14 has already been performed 66. If auto-location for the current vehicle trip has already been performed, the system 10 proceeds to an auto-location assessment module 68. If auto-location for the current vehicle trip has not been performed, the system proceeds to a location determination pre-assessment module 70.

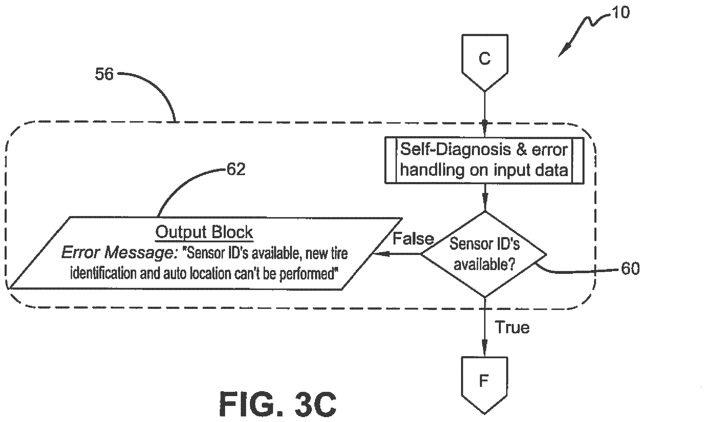

Referring to Figure 3C, in the initial system diagnosis module 56, a self-diagnosis of the system 10 is executed. As described in greater detail below, the system 10 is in communication with a cloud-based server 160, which saves data from the system. The initial system diagnosis module 56 checks for sensor ID information 60 in the saved data. If no sensor ID information is present in the saved data, the module generates a message that sensor ID information is not available 62. If sensor ID information is detected in the saved data, the system 10 proceeds to an identification review module 72.

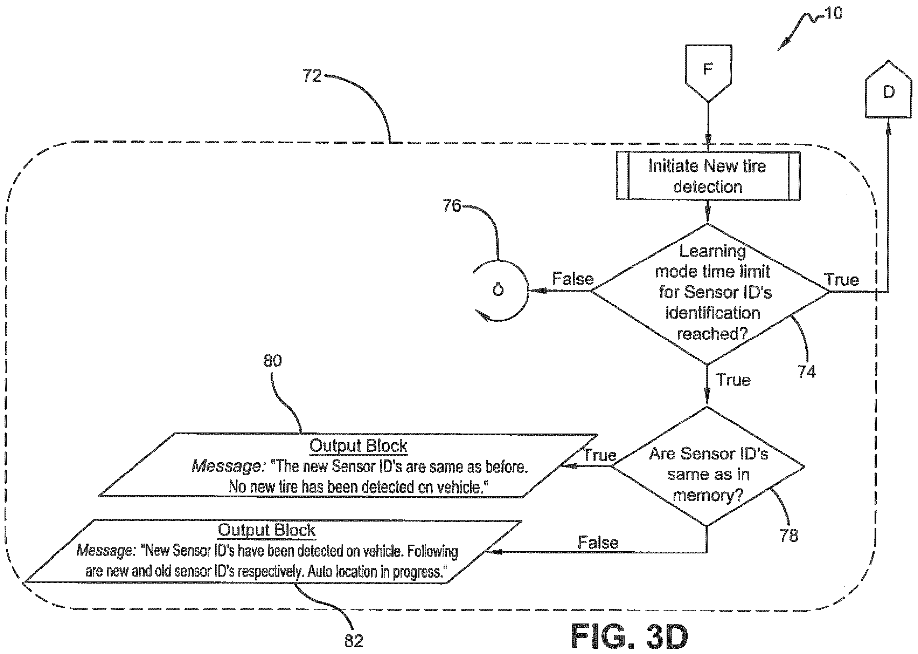

As shown in Figure 3D, the identification review module 72 detects a new tire 12. For the detection, the sensor ID information is reviewed for a predetermined period of time 74. Within the predetermined period of time, the review module 72 receives additional data 76 to continue to review the sensor ID information. When the predetermined period of time has elapsed, the system 10 proceeds to the location determination pre-assessment module 70. Also when the predetermined period of time has elapsed, the review module 72 determines if the sensor ID information matches previously received and stored sensor identification information 78 associated with the vehicle 14.

If the current sensor ID information matches sensor ID information identified for the vehicle 14 by the identification review module 72 when a previous iteration of the system 10 was running, the review module 72 generates a message that no new sensor ID information was found 80, as consistent sensor ID information corresponds to each tire 12 remaining in the same location on the vehicle from prior determinations. If the current sensor ID information does not match previously received and stored identification information, the review module 72 generates a message that auto location is being executed 82, as replacement or repositioning of one or more tires 12 may have occurred. It is to be understood that the system 10 may execute auto-location when the current sensor ID information matches sensor ID information identified for the vehicle 14 by the identification review module 72 when a previous iteration of the system 10 was running, as tire repositioning or rotation on the vehicle may have occurred.

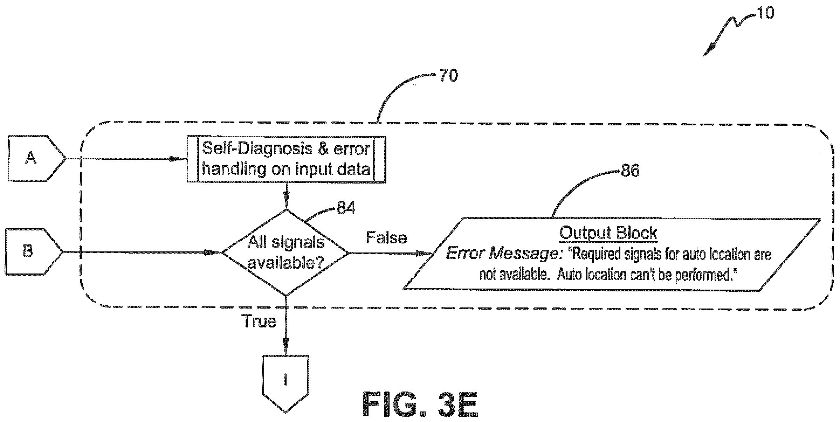

Turning to Figure 3E, the location determination pre-assessment module 70 verifies if all sensed parameter signals 42 are available 84. If the sensed parameter signals 42 are not available, the pre-assessment module 70 generates an error message that not all signals are available, so location cannot be performed 86. If the sensed parameter signals 42 are available, the system 10 proceeds to a sensor ID monitoring module 200.

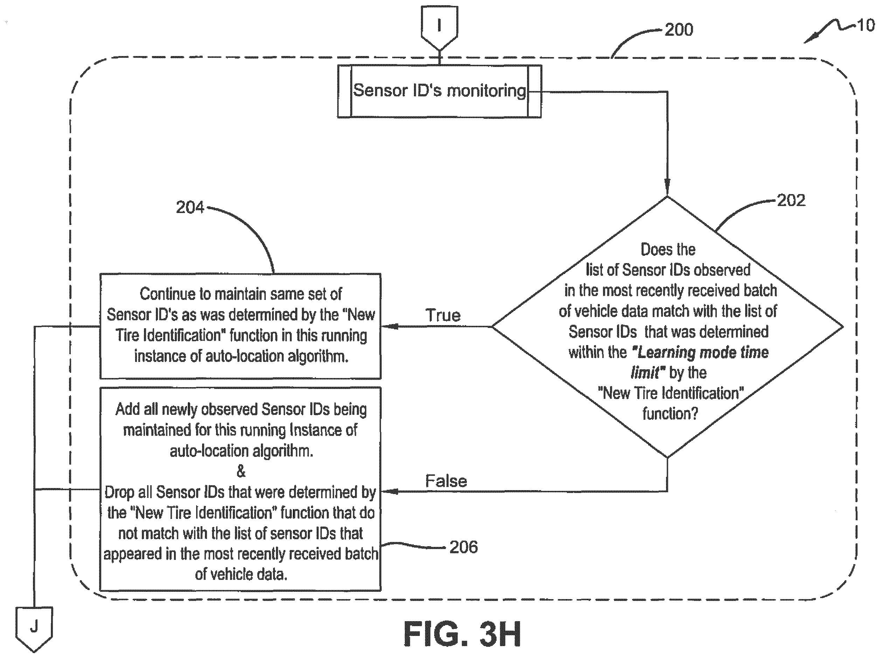

As shown in Figure 3H, the system 10 includes the sensor ID monitoring module 200. The sensor ID monitoring module 200 compares 202 the most recently received sensor ID information with the sensor ID information from the identification review module 72 (Figure 3D). If the most recently received sensor ID information and the sensor ID information from the identification review module 72 match, the sensor ID information is maintained 204. If the most recently received sensor ID information and the sensor ID information from the identification review module 72 do not match, the most recently received sensor ID information is added to the stored data as described above, and the sensor ID information from the identification review module 72 that does not match the most recently received sensor ID information is removed or dropped 206. After the sensor ID information is compared in the sensor ID monitoring module, the system 10 proceeds to a location determination module 88.

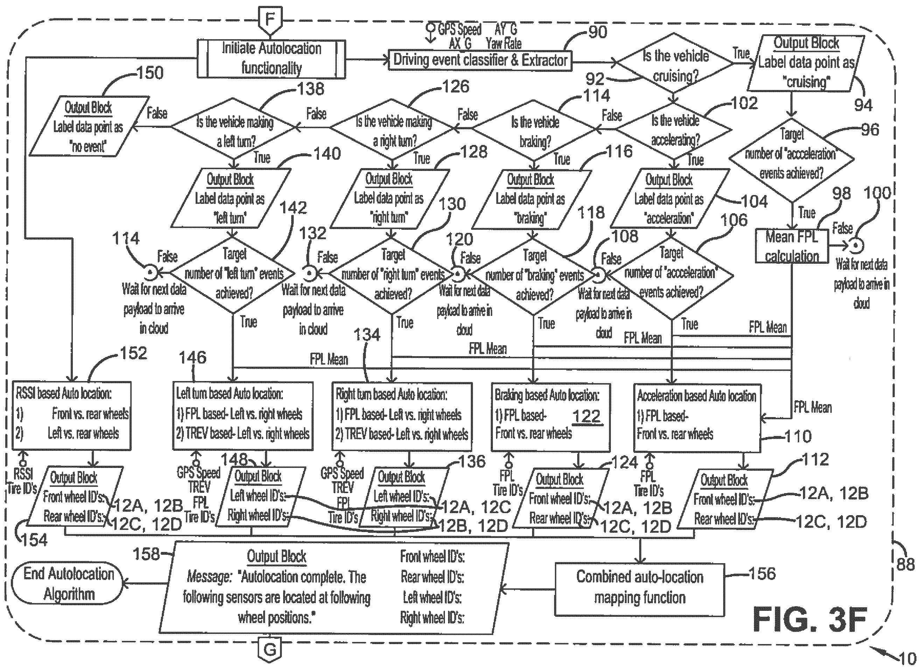

Referring to Figure 3F, the location determination module 88 executes a driving event classifier 90. The driving event classifier 90 determines from the sensed parameters 42 and the output data 52, such as the lateral acceleration of the vehicle 14, the longitudinal acceleration of the vehicle, and the yaw rate of the vehicle, whether the vehicle is traveling straight and at a steady speed, referred to as cruising 92. If the vehicle is traveling straight and at a steady speed, the data is labeled as cruising 94, which enables the determination of a mean footprint length 28. When the vehicle is cruising, the driving event classifier 90 checks whether a predetermined number of cruising events has been met 96. If so, a mean footprint length 28 for each tire 12 is determined 98. If the predetermined number of cruising events has not been met, the driving event classifier 90 waits for additional sensed parameters 42 to be received 100.

If the vehicle is not traveling straight and at a steady speed, the driving event classifier 90 determines, based on the sensed parameters 42, whether the vehicle 14 is accelerating 102. If the vehicle 14 is accelerating, the sensed parameters 42 are designated as acceleration data 104. The driving event classifier 90 then checks whether a predetermined number of acceleration events has been met 106. If the predetermined number of acceleration events has not been met, the driving event classifier 90 waits for additional sensed parameters 42 to be received 108. If the predetermined number of acceleration events has been met, the determined mean footprint length 98 is input into an acceleration-based auto-locator 110.

In the acceleration-based auto-locator 110, the front tire positions 12A and 12B are distinguished from the rear tire positions 12C and 12D. More particularly, when the vehicle 14 accelerates, there is typically a load transfer from the front tires 12A and 12B to the rear tires 12C and 12D. This load transfer results in a positive change or gain in the footprint length 28 for the rear tires 12C and 12D relative to the mean footprint length, and a negative change or reduction in the footprint length for the front tires 12A and 12B relative to the mean footprint length. This positive change in the footprint length 28 for the rear tires 12C and 12D and negative change in the footprint length for the front tires 12A and 12B enables the front tires to be distinguished from the rear tires. Once the front tires 12A and 12B are distinguished from the rear tires 12C and 12D, the relative front and rear positions are sent to an acceleration output block 112.

If the vehicle 14 is not accelerating, the driving event classifier 90 determines, based on the sensed parameters 42, whether the vehicle 14 is braking 114. If the vehicle 14 is braking, the sensed parameters 42 are designated as braking data 116. The driving event classifier 90 checks whether a predetermined number of braking events has been met 118. If the predetermined number of braking events has not been met, the driving event classifier 90 waits for additional sensed parameters 42 to be received 120. If the predetermined number of braking events has been met, the determined mean footprint length 98 is input into a braking-based auto-locator 122.

In the braking-based auto-locator 122, the front tire positions 12A and 12B are distinguished from the rear tire positions 12C and 12D. When the vehicle 14 brakes, there is typically a load transfer from the rear tires 12C and 12D to the front tires 12A and 12B. This load transfer results in a positive change or gain in the footprint length 28 for the front tires 12A and 12B relative to the mean footprint length, and a negative change or reduction in the footprint length for the rear tires 12C and 12D relative to the mean footprint length. This positive change in the footprint length 28 for the front tires 12A and 12B and negative change in the footprint length for the rear tires 12C and 12C enables the front tires to be distinguished from the rear tires. Once the front tires 12A and 12B are distinguished from the rear tires 12C and 12D, the relative front and rear positions are sent to a braking output block 124.

If the vehicle 14 is not braking, the driving event classifier 90 determines, based on the sensed parameters 42, whether the vehicle is executing a right turn 126. If the vehicle 14 is executing a right turn, the sensed parameters 42 are designated as right turn data 128. The driving event classifier 90 then checks whether a predetermined number of right turn events has been met 130. If the predetermined number of right turn events has not been met, the driving event classifier 90 waits for additional sensed parameters 42 to be received 132. If the predetermined number of right turn events has been met, the determined mean footprint length 98 is input into a right turn based auto-locator 134.

In the right turn based auto-locator 134, the left tire positions 12A and 12C are distinguished from the right tire positions 12B and 12D. More particularly, when the vehicle 14 executes a right turn, there is lateral load transfer from the inside or right side tires 12B and 12D to the outside or left side tires 12A and 12C. This load transfer results in a positive change or gain in the footprint length 28 for the left side tires 12A and 12C relative to the mean footprint length, and a negative change or reduction in the footprint length for right side tires 12B and 12D relative to the mean footprint length, which enables the left side tires to be distinguished from the right side tires.

In addition, during turning of the vehicle 14, each outer wheel turns 16 slower than the inner wheel. The speed difference between the wheel revolution time 40 (TREV) for each tire 12 and the speed of the vehicle 14 is expected to be positive for the tires on the outer wheels 16 and negative for the tires on the inner wheels, further enabling the left side tires 12A and 12C to be distinguished from the right side tires 12B and 12D. Once the left side tires 12A and 12C are distinguished from the right side tires 12B and 12D, the relative left and right positions are sent to a right turn output block 136.

If the vehicle 14 is not executing a right turn, the driving event classifier 90 determines, based on the sensed parameters 42, whether the vehicle is executing a left turn 138. If the vehicle 14 is executing a left turn, the sensed parameters 42 are designated as left turn data 140. The driving event classifier 90 then checks whether a predetermined number of left turn events has been met 142. If the predetermined number of left turn events has not been met, the driving event classifier 90 waits for additional sensed parameters 42 to be received 144. If the predetermined number of left turn events has been met, the determined mean footprint length 98 is input into a left turn based auto-locator 146.

In the left turn based auto-locator 146, the left tire positions 12A and 12C are distinguished from the right tire positions 12B and 12D. When the vehicle 14 executes a left turn, there is lateral load transfer from the inside or left side tires 12A and 12C to the outside or right side tires 12B and 12D. This load transfer results in a positive change or gain in the footprint length 28 for the right side tires 12B and 12D relative to the mean footprint length, and a negative change or reduction in the footprint length for left side tires 12A and 12C relative to the mean footprint length, which enables the left side tires to be distinguished from the right side tires.

In addition, during turning, the speed difference between the wheel revolution time 40 (TREV) for each tire 12 and the speed of the vehicle 14 is expected to be positive for the tires on the outer wheels 16 and negative for the tires on the inner wheels, further enabling the left side tires 12A and 12C to be distinguished from the right side tires 12B and 12D. Once the left side tires 12A and 12C are distinguished from the right side tires 12B and 12D, the relative left and right positions are sent to a left turn output block 148.

If the vehicle 14 is not executing a left turn, the driving event classifier 90 labels the sensed parameters 42 as a non-event 150, and the data are not used as inputs for auto-location based on footprint length 28 and TREV 40 methodology.

Optionally, the driving event classifier 90 may include a received signal strength indicator (RSSI) auto-locator 152. For example, when a vehicle-based processor or receiver is employed, it may be placed closer to the rear tires 12C and 12D than the front tires 12A and 12B. In such a case, the signal received from the sensor unit 26 in each of the rear tires 12C and 12D will be stronger than the strength of the signal received from the sensor unit in each of the front tires 12A and 12B, enabling the front tires to be distinguished from the rear tires. Once the front tires 12A and 12B are distinguished from the rear tires 12C and 12D, the relative front and rear positions are sent to an RSSI output block 154.

The front tire position data 12A and 12B and the rear tire position data 12C and 12D from the acceleration output block 112, the front tire position data and the rear tire position data from the braking output block 124, the left side tire position data and the right side tire position data from the right turn output block 136, the left side tire position data and the right side tire position data from the left turn output block 148, and optionally, the front tire position data and the rear tire position data from the RSSI output block 154, are sent to a combined auto-location mapping function 156. The combined auto-location mapping function 156 executes a comparison between the data from all of the output blocks, isolating the front tires 12A and 12B from the rear tires 12C and 12D, and the left tires from the right tires. In this manner, the position of each respective front left tire 12A, front right tire 12B, rear left tire 12C and rear right tire 12D is identified.

The identification of the position of respective front left tire 12A, front right tire 12B, rear left tire 12C and rear right tire 12D locations is output from the combined auto-location mapping function 156 to an auto-location output block 158. The output block 158 generates a message correlating each sensor unit 26, and thus its sensed parameters, to a respective front left tire 12A, front right tire 12B, rear left tire 12C and rear right tire 12D location.

Returning to Figure 3A, the identified location or positions of each sensor unit 26 and its respective tire 12A, 12B, 12C and 12D is transmitted from the output block 158 to a cloud-based server 160. The cloud-based server 160 may be in electronic communication with control systems of the vehicle 14, a fleet management device, or a vehicle operator device. In this manner, the parameters sensed by each sensor unit 26 may be correlated to each respective tire 12A, 12B, 12C and 12D for use in vehicle control systems, a fleet manager, and/or an operator of the vehicle 14.

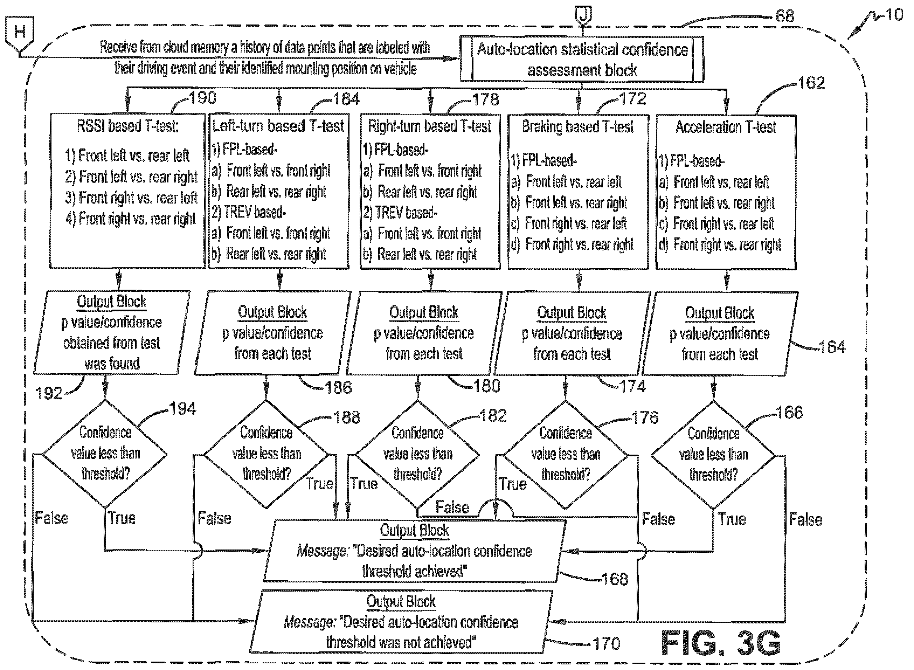

With reference to Figure 3G, the auto-location assessment module 68 provides an analysis of historical data to ensure a satisfactory level of statistical confidence is achieved by
the system 10. Location data as determined above, along with sensed parameter data 42, is input from the cloud-based server 160 into the assessment module 68. The assessment module 68 employs statistical tests to determine the level of statistical confidence reached by the system 10. The statistical test that is employed is an inferential statistical analysis, which is referred to as a T-test.

For example, an acceleration T-test 162 employs the change in footprint length 28 as described above from the acceleration data 104 to compare footprint-length based position determinations 112 for the front left tire 12A versus the rear left tire 12C, the front left tire versus the rear right tire 12D, the front right tire 12B versus the rear left tire, and the front right tire versus the rear right tire. The T-test 162 outputs a confidence value or level 164. The output confidence value 164 is compared to a predetermined threshold value 166. If the confidence value 164 is less than the threshold, the assessment module 68 generates a message that the auto-location confidence threshold of the system 10 has been achieved 168. If the confidence value 164 is not less than the threshold, the assessment module 68 generates a message that the auto-location confidence threshold of the system 10 has not been achieved 170.

A braking-based T-test 172 employs the change in footprint length 28 as described above from the braking data 116 to compare footprint-length based position determinations 124 for the front left tire 12A versus the rear left tire 12C, the front left tire versus the rear right tire 12D, the front right tire 12B versus the rear left tire, and the front right tire versus the rear right tire. The T-test 172 outputs a confidence value or level 174. The output confidence value 174 is compared to a predetermined threshold value 176. If the confidence value 174 is less than the threshold, the assessment module 68 generates the message that the auto-location confidence threshold of the system 10 has been achieved 168. If the confidence value 174 is not less than the threshold, the assessment module 68 generates the message that the auto-location confidence threshold of the system 10 has not been achieved 170.

A right-turn based T-test 178 employs labeled data points from the right turn data 128 to compare right turn determinations 136, including the change in footprint length 28 and the speed difference based determinations described above for the front left tire 12A versus the front right tire 12B and the rear left tire 12C versus the rear right tire 12D. The T-test 178 outputs a confidence value or level 180. The output confidence value 180 is compared to a predetermined threshold value 182. If the confidence value 180 is less than the threshold, the assessment module 68 generates the message that the auto-location confidence threshold of the system 10 has been achieved 168. If the confidence value 180 is not less than the threshold, the assessment module 68 generates the message that the auto-location confidence threshold of the system 10 has not been achieved 170.

A left-turn based T-test 184 employs labeled data points from the left turn data 140 to compare left turn determinations 148, including the change in footprint length 28 and the speed difference based determinations described above for the front left tire 12A versus the front right tire 12B and the rear left tire 12C versus the rear right tire 12D. The T-test 184 outputs a confidence value or level 186. The output confidence value 188 is compared to a predetermined threshold value 190. If the confidence value 188 is less than the threshold, the assessment module 68 generates the message that the auto-location confidence threshold of the system 10 has been achieved 168. If the confidence value 188 is not less than the threshold, the assessment module 68 generates the message that the auto-location confidence threshold of the system 10 has not been achieved 170.

An RSSI-based T-test 190 employs the RSSI determinations 154 to compare position determinations for the front left tire 12A versus the rear left tire 12C, the front left tire versus the rear right tire 12D, the front right tire 12B versus the rear left tire, and the front right tire versus the rear right tire. The T-test 190 outputs a confidence value or level 192. The output confidence value 192 is compared to a predetermined threshold value 194. If the confidence value 192 is less than the threshold, the assessment module 68 generates the message that the auto-location confidence threshold of the system 10 has been achieved 168. If the confidence value 192 is not less than the threshold, the assessment module 68 generates the message that the auto-location confidence threshold of the system 10 has not been achieved 170.

In this manner, the auto-location system 10 of the present invention employs sensed parameters 42, including the tire footprint length 28, to identify and locate the position of each tire 12 on a vehicle 14. As described above, the auto-location system 10 generates notifications when a newly mounted tire 12 on the vehicle 14 is detected, accompanied by the tire location or mounting position. The system 10 also generates notifications when a mounting position or location of a tire 12 has been changed, such as in a tire rotation procedure, accompanied by the new tire position or location. The system 10 provides economical and accurate identification of the location of each tire 12 on the vehicle 14 with self-diagnosis, and optionally includes an assessment module 68 that analyzes historical data to ensure a satisfactory level of statistical confidence is achieved by the system.

The present invention also includes a method for locating the position of a tire 12 on a vehicle 14. The method includes steps in accordance with the description that is presented above and shown in Figures 1 through 3H.

It is to be understood that the structure and method of the above-described auto-location system may be altered or rearranged, or components or steps known to those skilled in the art omitted or added, without affecting the overall concept or operation of the invention. For example, electronic communication may be through a wired connection or wireless communication without affecting the overall concept or operation of the invention. Such wireless communications include radio frequency (RF) and Bluetooth^{®} communications.

## Claims

1. An auto-location system for locating a position of a tire (12) supporting a vehicle (14), the system (10) comprising:
a sensor unit (26) being mounted on the tire (12), the sensor unit (26) including a footprint length measurement sensor to measure a length of a footprint of the tire;
a processor (46) in electronic communication with the sensor unit (26), the processor (46) being configured for receiving the measured footprint length;
a driving event classifier (90) for execution on the processor (46), the driving event classifier (90) operationally employing the measured footprint length to determine the position of the tire (12) on the vehicle (14); and
an auto-location output block (112, 124, 136, 148, 154) for executing on the processor (46), the auto-location output block being configured for receiving the determined position of the tire (12) on the vehicle (14) and for generating a message correlating the sensor unit (26) to the position of the tire (12) on the vehicle (14); **characterized in that**
the system further comprises at least one of an acceleration T-test (162) for employing acceleration data to compare footprint-length based position determinations, a braking-based T-test (172) for employing braking data to compare footprint-length based position determinations, a right-turn based T-test (178) for employing right turn data to compare right turn determinations, a left-turn based T-test (184) for employing left turn data to compare left turn determinations, and a received signal strength indicator based T-test for employing received signal strength indicators to compare position determinations.

2. The auto-location system of claim 1, wherein the sensor unit (26) further comprises at least one of a pressure sensor (34) to measure a pressure of the tire, a temperature sensor (36) to measure a temperature of the tire, an accelerometer for measuring acceleration of a wheel (16) on which the tire (12) is mounted, a revolution counter to measure a revolution time of the wheel (16), and electronic memory capacity for storing identification information for the tire (12).

3. The auto-location system of claim 1 or 2, wherein the driving event classifier (90) is configured to determine from parameters (42) sensed by the sensor unit (26) a mean footprint length of the tire (12) when a predetermined number of cruising events has been met.

4. The auto-location system of at least one of the previous claims, wherein the driving event classifier (90) is configured to determine from parameters (42) sensed by the sensor unit (26) whether the vehicle is accelerating, and if the vehicle is accelerating, to input the determined mean footprint length into an acceleration-based auto-locator (112) when a predetermined number of acceleration events has been met, and, optionally, wherein a front tire position is distinguished from a rear tire position in the acceleration-based auto-locator (112) using a change from the determined mean footprint length.

5. The auto-location system of at least one of the previous claims, wherein the driving event classifier (90) is configured to determine from parameters (42) sensed by the sensor unit (26) whether the vehicle (14) is braking, and if the vehicle is braking, to input the determined mean footprint length into a braking-based auto-locator (124) when a predetermined number of braking events has been met, and, optionally, wherein a front tire position is distinguished from a rear tire position in the braking-based auto-locator (124) using a change from the determined mean footprint length.

6. The auto-location system of at least one of the previous claims, wherein the driving event classifier (90) is configured to determine from parameters sensed by the sensor unit (26) whether the vehicle (12) is executing a turn, and if the vehicle is executing a turn, to input the determined mean footprint length into a turn-based auto-locator (136, 148) when a predetermined number of turn events has been met, and, optionally, wherein a left tire position is distinguished from a right tire position in the turn-based locator (136, 148) using a change from the determined mean footprint length.

7. The auto-location system of claim 6, wherein a left tire position is distinguished from a right tire position in the right turn-based auto-locator (136, 148) using a speed difference between a wheel revolution time and a speed of the vehicle.

8. The auto-location system of at least one of the previous claims, wherein the driving event classifier (90) includes a received signal strength indicator auto-locator (154) to distinguish a front tire position from a rear tire position.

9. The auto-location system of at least one of the previous claims, further comprising:
(i) an initial assessment module (50) configured for execution on the processor (46) to determine if a location of the tire (12) for a current trip of the vehicle (14) has already been performed; and/or
(ii) an initial system diagnosis module (56) configured for execution on the processor (46), the initial system diagnosis module (56) being configured for executing a self-diagnosis of the system (10) by checking for sensor identification information in saved system data.

10. The auto-location system of at least one of the previous claims, further comprising an identification review module (72) configured for execution on the processor (46), the identification review module (72) operationally including an initiation of a detection of a new tire by:
reviewing received sensor identification information for a predetermined period of time;
determining if the received sensor identification information matches previously received sensor identification information;
if the received sensor identification information matches the previously received sensor identification information, the identification review module (72) generates a message that no new sensor identification information was found; and
if the received sensor identification information does or does not match the previously received identification information, the system (10) executes auto-location.

11. The auto-location system of at least one of the previous claims, further comprising:
(i) a location determination pre-assessment module (70) configured for execution on the processor (46), wherein the location determination pre-assessment module (70) operationally verifies if all parameters sensed by the sensor unit (26) are available; and/or
(ii) an auto-location assessment module (68) configured for execution on the processor (46), the auto-location assessment module (68) operationally executing a statistical test to determine a level of statistical confidence reached by the system (10).

12. The auto-location system of claim 1, wherein at least one of the T-tests (162, 172, 178, 184) is configured to output a confidence value (164), wherein, if the confidence value (164) is less than a threshold, the auto-location assessment module (68) operationally generates a message that an auto-location confidence threshold of the system (10) has been achieved, and, if the confidence value (164) is not less than the threshold, the auto-location assessment module (68) operationally generates a message that the auto-location confidence threshold of the system (10) has not been achieved.

13. Use of the system in accordance with at least one of the previous claims for locating a position of a tire (12) supporting a vehicle (14).

14. A method of locating a position of a tire (12) supporting a vehicle (14), preferably by using a system (10) in accordance with at least one of the previous claims, the method comprising:
mounting a sensor unit (26) on the tire (12), the sensor unit (26) including a footprint length measurement sensor measuring a length of a footprint of the tire;
providing a processor (46) in electronic communication with the sensor unit (26), the processor (46) receiving the measured footprint length;
providing a driving event classifier (90) executed on the processor (46), the driving event classifier (90) employing the measured footprint length to determine the position of the tire (12) on the vehicle (14); and
providing an auto-location output block (112, 124, 136, 148, 154) executed on the processor (46), the auto-location output block receiving the determined position of the tire (12) on the vehicle (14) and generating a message correlating the sensor unit (26) to the position of the tire (12) on the vehicle (14); **characterized in that**
the method further comprises performing at least one of an acceleration T-test (162) for employing acceleration data to compare footprint-length based position determinations, a braking-based T-test (172) for employing braking data to compare footprint-length based position determinations, a right-turn based T-test (178) for employing right turn data to compare right turn determinations, a left-turn based T-test (184) for employing left turn data to compare left turn determinations, and a received signal strength indicator based T-test for employing received signal strength indicators to compare position determinations.

## Patentansprüche

1. Autolokalisierungssystem zum Lokalisieren einer Position eines Luftreifens (12), der ein Fahrzeug (14) trägt, wobei das System (10) das Folgende umfasst:
eine Sensoreinheit (26), die an dem Luftreifen (12) angebracht ist, wobei die Sensoreinheit (26) einen Messsensor für die Länge der Aufstandsfläche umfasst, der dazu dient, eine Länge einer Aufstandsfläche des Reifens zu messen;
einen Prozessor (46), der mit der Sensoreinheit (26) elektronisch kommuniziert, wobei der Prozessor (46) so konfiguriert ist, dass er die gemessene Länge der Aufstandsfläche empfängt;
eine Vorrichtung zur Fahrereignis-Klassifikation (90), die dazu bestimmt ist, auf dem Prozessor (46) ausgeführt zu werden, wobei die Vorrichtung zur Fahrereignis-Klassifikation (90) die gemessene Länge der Aufstandsfläche operativ verwendet, um die Position des Luftreifens (12) an dem Fahrzeug (14) zu bestimmen; und
einen Autolokalisierungsausgabeblock (112, 124, 136, 148, 154), der dazu bestimmt ist, auf dem Prozessor (46) ausgeführt zu werden, wobei der Autolokalisierungsausgabeblock dazu konfiguriert ist, die Position des Luftreifens (12) an dem Fahrzeug (14), die bestimmt wurde, zu empfangen und eine Nachricht zu erzeugen, die die Sensoreinheit (26) mit der Position des Luftreifens (12) an dem Fahrzeug (14) korreliert; **dadurch gekennzeichnet, dass**
das System ferner mindestens eines umfasst von einem Beschleunigungs-T-Test (162) zur Verwendung von Beschleunigungsdaten, um Bestimmungen der Positionen zu vergleichen, die auf der Länge der Aufstandsfläche basieren, einem auf Bremsung basierten T-Test (172) zur Verwendung von Bremsdaten, um Bestimmungen der Positionen zu vergleichen, die auf der Länge der Aufstandsfläche basieren, einem auf einer Rechtskurve basierten T-Test (178) zur Verwendung von Rechtskurvendaten, um Bestimmungen der Rechtskurven zu vergleichen, einem auf einer Linkskurve basierten T-Test (184) zur Verwendung von Linkskurvendaten, um Bestimmungen der Linkskurven zu vergleichen, und einem auf Angaben über die Stärke der empfangenen Signale basierten T-Test zur Verwendung von Angaben über die Stärke des empfangenen Signals, um Bestimmungen der Positionen zu vergleichen.

2. Autolokalisierungssystem nach Anspruch 1, wobei die Sensoreinheit (26) weiterhin mindestens einen Sensor umfasst, der ausgewählt ist aus einem Drucksensor (34), der dazu bestimmt ist, einen Druck des Luftreifens zu messen, einem Temperatursensor (36), , der dazu bestimmt ist, eine Temperatur des Reifens zu messen, einem Beschleunigungsmesser, der dazu bestimmt ist, die Beschleunigung eines Rads (16) zu messen, an dem der Luftreifen (12) angebracht ist, einem Drehzahlmesser, der dazu bestimmt ist, eine Drehzeit des Rads (16) zu messen, und einer elektronischen Speicherkapazität, die dazu bestimmt ist, Identifikationsinformationen für den Luftreifen (12) zu speichern.

3. Autolokalisierungssystem nach Anspruch 1 oder 2, wobei die Vorrichtung zur Fahrereignis-Klassifikation (90) konfiguriert ist, um anhand von Parametern (42), die von der Sensoreinheit (26) erfasst werden, eine durchschnittliche Länge der Aufstandsfläche des Luftreifens (12) zu bestimmen, wenn eine vorbestimmte Anzahl von Fahrereignissen aufgetreten ist.

4. Autolokalisierungssystem nach mindestens einem der vorhergehenden Ansprüche, wobei die Vorrichtung zur Fahrereignis-Klassifikation (90) konfiguriert ist, um anhand von Parametern (42), die von der Sensoreinheit (26) erfasst werden, zu bestimmen, ob das Fahrzeug beschleunigt wird oder nicht, und wenn das Fahrzeug beschleunigt wird, um die durchschnittliche Länge der Aufstandsfläche, die bestimmt wurde, in eine auf der Beschleunigung basierten Vorrichtung zur automatischen Lokalisierung (112) einzutreten, wenn eine vorbestimmte Anzahl von Beschleunigungsereignissen aufgetreten ist, und optional wobei in der auf der Beschleunigung basierten Vorrichtung zur automatischen Lokalisierung (112), zwischen einer Position eines vorderen Luftreifens und einer Position eines hinteren Luftreifens unter Verwendung einer Änderung in Bezug auf die durchschnittliche Länge der Aufstandsfläche, die bestimmt wurde, unterschieden wird.

5. Autolokalisierungssystem nach mindestens einem der vorhergehenden Ansprüche, wobei die Vorrichtung zur Fahrereignis-Klassifikation (90) konfiguriert ist, um anhand von Parametern (42), die von der Sensoreinheit (26) erfasst werden, zu bestimmen, ob das Fahrzeug (14) bremst oder nicht, und wenn das Fahrzeug bremst, um die mittlere Länge des Aufstandsfläche, die bestimmt wurde, in eine auf der Bremsung basierten Vorrichtung zur automatischen Lokalisierung (124) einzutreten, wenn eine vorbestimmte Anzahl von Bremsereignissen aufgetreten ist, und wobei optional in der auf der Bremsung basierten Vorrichtung zur automatischen Lokalisierung (124), zwischen einer Position eines vorderen Reifens und einer Position eines hinteren Reifens unter Verwendung einer Änderung in Bezug auf die mittlere Länge der Aufstandsfläche, die bestimmt wurde, unterschieden wird.

6. Autolokalisierungssystem nach mindestens einem der vorhergehenden Ansprüche, wobei die Vorrichtung zur Fahrereignis-Klassifikation (90) konfiguriert ist, um anhand von Parametern, die von der Sensoreinheit (26) erfasst werden, zu bestimmen, ob das Fahrzeug (14) eine Kurve durchfährt oder nicht, und wenn das Fahrzeug eine Kurve durchfährt, um die mittlere Länge der Aufstandsfläche, die bestimmt wurde, in eine auf der Durchfahrt einer Kurve basierten Vorrichtung zur automatischen Lokalisierung (136, 148) einzutreten, wenn eine vorbestimmte Anzahl von Kurvenverhandlungsereignissen aufgetreten ist, und wobei optional in der auf einer Kurvenverhandlung basierten Vorrichtung zur automatischen Lokalisierung (136, 148), zwischen einer Position eines linken Luftreifens und einer Position eines rechten Luftreifens unter Verwendung einer Änderung in Bezug auf die mittlere Länge der Aufstandsfläche, die bestimmt wurde, unterschieden wird.

7. Autolokalisierungssystem nach Anspruch 6, wobei eine Unterscheidung zwischen einer Position eines linken Luftreifens und einer Position eines rechten Luftreifens in der auf das Durchfahren einer Rechtskurve basierten Vorrichtung zur automatischen Lokalisierung (136, 148) vorgenommen wird, wobei eine Geschwindigkeitsdifferenz zwischen einer Raddrehzeit und einer Fahrzeuggeschwindigkeit verwendet wird.

8. Autolokalisierungssystem nach mindestens einem der vorhergehenden Ansprüche, wobei die Vorrichtung zur Fahrereignis-Klassifikation (90) eine Vorrichtung zur automatischen Lokalisierung (154) umfasst, die Angaben über die Stärke des empfangenen Signals liefert, um zwischen einer Position eines vorderen Reifens und einer Position eines hinteren Reifens zu unterscheiden.

9. Autolokalisierungssystem nach mindestens einem der vorhergehenden Ansprüche, das weiterhin umfasst:
(i) ein Modul (50) zur Erstbewertung, das für seine Ausführung auf dem Prozessor (46) konfiguriert ist, um zu ermitteln, ob eine Lokalisierung des Luftreifens (12) für eine aktuelle Fahrt des Fahrzeugs (14) bereits durchgeführt wurde; und/oder
(ii) ein Modul (56) zur anfänglichen Systemdiagnose, das für seine Ausführung auf dem Prozessor (46) konfiguriert ist, wobei das Modul (56) zur anfänglichen Systemdiagnose konfiguriert ist, um eine automatische Diagnose des Systems (10) durchzuführen, indem es überprüft, ob Informationen über die Sensoridentifikation in gespeicherten Systemdaten vorhanden sind.

10. Autolokalisierungssystem nach mindestens einem der vorhergehenden Ansprüche, das ferner ein Identifikationsprüfungsmodul (72) umfasst, das für seine Ausführung auf dem Prozessor (46) konfiguriert ist, wobei das Identifikationsprüfungsmodul (72) operativ ein Auslösen einer Erkennung eines neuen Luftreifens durch Folgendes umfasst
das Prüfen von während einer vorbestimmten Zeitdauer empfangenen Sensoridentifikationsinformationen;
das Bestimmen, inwiefern die empfangenen Sensoridentifikationsinformationen mit Sensoridentifikationsinformationen übereinstimmen, die zuvor empfangen wurden;
wenn die empfangenen Sensoridentifikationsinformationen mit den zuvor empfangenen Sensoridentifikationsinformationen übereinstimmen, erzeugt das Identifikationsprüfungsmodul (72) eine Nachricht, dass keine neuen Sensoridentifikationsinformationen gefunden wurden; und
wenn die empfangenen Sensoridentifikationsinformationen mit den zuvor empfangenen Sensoridentifikationsinformationen übereinstimmen oder nicht übereinstimmen, führt das System (10) eine automatische Lokalisierung durch.

11. Autolokalisierungssystem nach mindestens einem der vorhergehenden Ansprüche, das weiterhin umfasst:
(i) ein Modul (70) zur Vorbewertung der Lokalisierungsbestimmung, das für seine Ausführung auf dem Prozessor (46) konfiguriert ist, wobei das Modul (70) zur Vorbewertung der Lokalisierungsbestimmung operativ überprüft, ob alle von der Sensoreinheit (26) erfassten Parameter verfügbar sind; und/oder
(ii) ein Modul (68) zur Bewertung der automatischen Lokalisierung, das für seine Ausführung auf dem Prozessor (46) konfiguriert ist, wobei das Modul (68) zur Bewertung der automatischen Lokalisierung operativ einen statistischen Test durchführt, um ein statistisches Zuverlässigkeitsniveau zu bestimmen, das von dem System (10) erreicht worden ist.

12. Autolokalisierungssystem nach Anspruch 1, wobei mindestens einer der T-Tests (162, 172, 178, 184) so konfiguriert ist, dass er einen Zuverlässigkeitswert (164) liefert; wobei, wenn der Zuverlässigkeitswert (164) unterhalb eines Schwellenwerts liegt, das Modul (68) zur Auswertung der automatischen Lokalisierung operativ eine Meldung erzeugt, dass ein Schwellenwert für die Zuverlässigkeit der automatischen Lokalisierung des Systems (10) erreicht wurde, und wobei, wenn der Zuverlässigkeitswert (164) nicht unterhalb des Schwellenwerts liegt, das Modul (68) zur Auswertung der automatischen Lokalisierung operativ eine Meldung erzeugt, dass der Schwellenwert für die Zuverlässigkeit der automatischen Lokalisierung des Systems (10) nicht erreicht wurde.

13. Verwendung des Systems in Übereinstimmung mit mindestens einem der vorhergehenden Ansprüche, um eine Position eines Luftreifens (12) zu lokalisieren, der ein Fahrzeug (14) trägt.

14. Verfahren zum Lokalisieren einer Position eines Luftreifens (12), der ein Fahrzeug (14) trägt, vorzugsweise in Übereinstimmung mit mindestens einem der vorhergehenden Ansprüche, wobei das Verfahren umfasst:
das Anbringen einer Sensoreinheit (26) an dem Luftreifen (12), wobei die Sensoreinheit (26) einen Sensor zur Messung der Aufstandslänge umfasst, der eine Länge der Aufstandsfläche des Reifens misst;
das Bereitstellen eines Prozessors (46), der mit der Sensoreinheit (26) elektronisch kommuniziert, wobei der Prozessor (46) die gemessene Länge der Aufstandsfläche empfängt;
das Bereitstellen einer Vorrichtung zur Fahrereignis-Klassifikation (90), der auf dem Prozessor (46) ausgeführt wird, wobei die Vorrichtung zur Fahrereignis-Klassifikation (90) die gemessene Länge der Aufstandsfläche verwendet, um die Position des Luftreifens (12) an dem Fahrzeug (14) zu bestimmen; und
das Bereitstellen eines Autolokalisierungsausgabeblocks (112, 124, 136, 148, 154), der auf dem Prozessor (46) ausgeführt wird, wobei der Autolokalisierungsausgabeblock die bestimmte Position des Luftreifens (12) an dem Fahrzeug (14) empfängt und eine Nachricht erzeugt, die die Sensoreinheit (26) mit der Position des Luftreifens (12) an dem Fahrzeug (14) korreliert; **dadurch gekennzeichnet, dass**
das Verfahren ferner das Durchführen mindestens eines T-Tests umfasst, der ausgewählt ist aus einem auf der Beschleunigungs-T-Test (162) zur Verwendung von Beschleunigungsdaten, um Bestimmungen der Positionen zu vergleichen, die auf der Länge der Aufstandsfläche basieren, einem auf der Bremsung basierten T-Test (172) zur Verwendung von Bremsdaten, um Bestimmungen der Positionen zu vergleichen, die auf der Länge der Aufstandsfläche basieren, einem auf einer Rechtskurve basierten T-Test (178) zur Verwendung von Rechtskurvendaten, um Bestimmungen der Rechtskurven zu vergleichen, einem auf einer Linkskurve basierten T-Test (184) zur Verwendung von Linkskurvendaten, um Bestimmungen der Linkskurven zu vergleichen, und einem auf Angaben über die Stärke der empfangenen Signale basierten T-Test zur Verwendung von Angaben über die Stärke des empfangenen Signals, um Bestimmungen der Positionen zu vergleichen.

## Revendications

1. Système de localisation automatique destiné à localiser une position d'un bandage pneumatique (12) qui supporte un véhicule (14), le système (10) comprenant :
une unité (26) faisant office de capteur qui est montée sur le bandage pneumatique (12), l'unité (26) faisant office de capteur englobant un capteur de la mesure de la longueur de l'empreinte qui est destiné à mesurer une longueur d'une empreinte du bandage pneumatique ;
un processeur (46) qui est mis en communication par voie électronique avec l'unité (26) faisant office de capteur, dans lequel le processeur (46) est configuré pour recevoir la longueur de l'empreinte qui a été mesurée ;
un dispositif de classification d'événements de conduite (90) qui est destiné à s'exécuterk sur le processeur (46), le dispositif de classification d'événements de conduite (90) utilisant, d'une manière opérationnelle, la longueur de l'empreinte qui a été mesurée afin de déterminer la position du bandage pneumatique (12) sur le véhicule (14) ; et
un bloc de sortie de localisation automatique (112, 124, 136, 148, 154) qui est destiné à s'exécuter sur le processeur (46), dans lequel le bloc de sortie de localisation automatique est configuré pour recevoir la position du bandage pneumatique (12) sur le véhicule (14) qui a été déterminée et pour générer un message qui établit une corrélation entre l'unité (26) faisant office de capteur et la position du bandage pneumatique (12) sur le véhicule (14) ; **caractérisé en ce que**
le système comprend en outre au moins un test de Student qui est choisi parmi un test de Student qui se base sur l'accélération (162) destiné à utiliser des données d'accélération afin de comparer des déterminations de la position qui sont basées sur la longueur de l'empreinte, un test de Student qui se base sur le freinage (172) destiné à utiliser des données de freinage afin de comparer des déterminations de la position qui sont basées sur la longueur de l'empreinte, un test de Student qui se base sur le virage à droite (178) destiné à utiliser des données de virage à droite afin de comparer des déterminations de virage à droite, un test de Student qui se base sur le virage à gauche (184) destiné à utiliser des données de virage à gauche afin de comparer des déterminations de virage à gauche, et un test de Student qui se base sur des indications concernant l'intensité du signal reçu destiné à utiliser des indications concernant l'intensité du signal reçu afin de comparer des déterminations de position.

2. Système de localisation automatique selon la revendication 1, dans lequel l'unité (26) faisant office de capteur comprend en outre au moins un capteur qui est choisi parmi un capteur de la pression (34) qui est destiné à mesurer une pression du bandage pneumatique, un capteur de la température (36) qui est destiné à mesurer une température du bandage pneumatique, un accéléromètre qui est destiné à mesurer l'accélération d'une roue (16) sur laquelle est monté le bandage pneumatique (12), un compte-tours qui est destiné à mesurer un temps de rotation de la roue (16), et une capacité de mémoire électronique qui est destinée à stocker des informations d'identification pour le bandage pneumatique (12).

3. Système de localisation automatique selon la revendication 1 ou 2, dans lequel le dispositif de classification d'événements de conduite (90) est configuré pour déterminer, à partir de paramètres (42) qui sont détectés par l'unité (26) faisant office de capteur, une longueur moyenne de l'empreinte du bandage pneumatique (12) lorsqu'un nombre prédéterminé d'événements de croisière ont été rencontrés.

4. Système de localisation automatique selon au moins une des revendications précédentes, dans lequel le dispositif de classification d'événements de conduite (90) est configuré pour déterminer, à partir de paramètres (42) qui sont détectés par l'unité (26) faisant office de capteur, le fait de savoir si le véhicule est en train d'accélérer ou non, et si le véhicule est en train d'accélérer, pour entrer, dans un dispositif de localisation automatique (112) qui se base sur l'accélération, la longueur moyenne de l'empreinte qui a été déterminée, lorsqu'un nombre prédéterminé d'événements d'accélération ont été rencontrés, et, de manière facultative, dans lequel on procède à une distinction entre une position d'un bandage pneumatique avant et une position d'un bandage pneumatique arrière dans le dispositif de localisation automatique (112) qui se base sur l'accélération en utilisant un changement par rapport à la longueur moyenne de l'empreinte qui a été déterminée.

5. Système de localisation automatique selon au moins une des revendications précédentes, dans lequel le dispositif de classification d'événements de conduite (90) est configuré pour déterminer, à partir de paramètres (42) qui sont détectés par l'unité (26) faisant office de capteur, le fait de savoir si le véhicule (14) est en train de freiner ou non, et si le véhicule est en train de freiner, pour entrer, dans un dispositif de localisation automatique (124) qui se base sur le freinage, la longueur moyenne de l'empreinte qui a été déterminée, lorsqu'un nombre prédéterminé d'événements de freinage ont été rencontrés, et, de manière facultative, dans lequel on procède à une distinction entre une position d'un bandage pneumatique avant et une position d'un bandage pneumatique arrière dans le dispositif de localisation automatique (124) qui se base sur le freinage en utilisant un changement par rapport à la longueur moyenne de l'empreinte qui a été déterminée.

6. Système de localisation automatique selon au moins une des revendications précédentes, dans lequel le dispositif de classification d'événements de conduite (90) est configuré pour déterminer, à partir de paramètres qui sont détectés par l'unité (26) faisant office de capteur, le fait de savoir si le véhicule (14) est en train de négocier un virage ou non, et si le véhicule est en train de négocier un virage, pour entrer, dans un dispositif de localisation automatique (136, 148) qui se base sur la négociation d'un virage, la longueur moyenne de l'empreinte qui a été déterminée, lorsqu'un nombre prédéterminé d'événements de négociation d'un virage ont été rencontrés, et, de manière facultative, dans lequel on procède à une distinction entre une position d'un bandage pneumatique gauche et une position d'un bandage pneumatique droit dans le dispositif de localisation automatique (136, 148) qui se base sur la négociation d'un virage en utilisant un changement par rapport à la longueur moyenne de l'empreinte qui a été déterminée.

7. Système de localisation automatique selon la revendication 6, dans lequel on procède à une distinction entre une position d'un bandage pneumatique gauche et une position d'un bandage pneumatique droit dans le dispositif de localisation automatique (136, 148) qui se base sur la négociation d'un virage à droite en utilisant une différence de vitesse entre un temps de rotation d'une roue et une vitesse du véhicule.

8. Système de localisation automatique selon au moins une des revendications précédentes, dans lequel le dispositif de classification d'événements de conduite (90) englobe un dispositif de localisation automatique (154) qui se base sur des indications concernant l'intensité du signal reçu pour procéder à une distinction entre une position d'un bandage pneumatique avant et une position d'un bandage pneumatique arrière.

9. Système de localisation automatique selon au moins une des revendications précédentes, qui comprend en outre :
(i) un module d'évaluation initiale (50) qui est configuré pour son exécution sur le processeur (46) dans le but de déterminer le fait de savoir si une localisation du bandage pneumatique (12) pour un voyage en cours du véhicule (14) a déjà été mise en œuvre ; et/ou
(ii) un module (56) de diagnostic initial du système qui est configuré pour son exécution sur le processeur (46), dans lequel le module (56) de diagnostic initial du système est configuré pour exécuter un diagnostic automatique du système (10) par l'intermédiaire d'une vérification la présence d'informations concernant l'identification de capteurs dans des données du système qui ont été sauvegardées.

10. Système de localisation automatique selon au moins une des revendications précédentes, qui comprend en outre un module d'examen d'identification (72) qui est configuré pour son exécution sur le processeur (46), le module d'examen d'identification (72) englobant, sur le plan opérationnel, un déclenchement d'une détection d'un nouveau bandage pneumatique, par le fait de :
examiner des informations concernant l'identification de capteurs qui ont été reçues pendant un laps de temps prédéterminé ;
déterminer le fait de savoir si les informations concernant l'identification de capteurs qui ont été reçues correspondent à des informations concernant l'identification de capteurs qui ont été reçues auparavant ;
si les informations concernant l'identification de capteurs qui ont été reçues correspondent aux informations concernant l'identification de capteurs qui ont été reçues auparavant, le module d'examen d'identification (72) génère un message selon lequel aucune nouvelle information concernant l'identification de capteurs n'a été trouvée ; et
si les informations concernant l'identification de capteurs qui ont été reçues correspondent ou ne correspondent pas aux informations concernant l'identification de capteurs qui ont été reçues auparavant, le système (10) exécute une localisation automatique.

11. Système de localisation automatique selon au moins une des revendications précédentes, qui comprend en outre :
(i) un module de préévaluation de détermination de localisation (70) qui est configuré pour son exécution sur le processeur (46), dans lequel le module de préévaluation de détermination de localisation (70) vérifie, sur le plan opérationnel, le fait de savoir si tous les paramètres détectés par l'unité (28) faisant office de capteur sont disponibles ; et/ou
(ii) un module d'évaluation de localisation automatique (68) qui est configuré pour son exécution sur le processeur (46), dans lequel le module d'évaluation de localisation automatique (68) exécute, sur le plan opérationnel, un test statistique dans le but de déterminer un niveau de fiabilité statistique qui a été atteint par le système (10).

12. Système de localisation automatique selon la revendication 1, dans lequel au moins un des tests de Student (162, 172, 178, 184) est configuré pour fournir une valeur de fiabilité (164) ; dans lequel, si la valeur de fiabilité (164) est inférieure à un seuil, le module d'évaluation de localisation automatique (68) génère, sur le plan opérationnel, un message selon lequel un seuil de fiabilité de la localisation automatique du système (10) a été atteint, et, si la valeur de fiabilité (164) n'est pas inférieure au seuil, le module d'évaluation de localisation automatique (68) génère, sur le plan opérationnel, un message selon lequel le seuil de fiabilité de la localisation automatique du système (10) n'a pas été atteint.

13. Utilisation du système en conformité avec au moins une des revendications précédentes, afin de localiser une position d'un bandage pneumatique (12) qui supporte un véhicule (14).

14. Procédé de localisation d'une position d'un bandage pneumatique (12) qui supporte un véhicule (14), de préférence en conformité avec au moins une des revendications précédentes, dans lequel le procédé comprend le fait de :
monter une unité (26) faisant office de capteur sur le bandage pneumatique (12), l'unité (26) faisant office de capteur englobant un capteur de la mesure de la longueur de l'empreinte qui mesure une longueur d'une empreinte du bandage pneumatique ;
procurer un processeur (46) qui est mis en communication par voie électronique avec l'unité (26) faisant office de capteur, dans lequel le processeur (46) reçoit la longueur de l'empreinte qui a été mesurée ;
procurer un dispositif de classification d'événements de conduite (90) exécuté sur le processeur (46), dans lequel le dispositif de classification d'événements de conduite (90) utilise la longueur de l'empreinte qui a été mesurée afin de déterminer la position du bandage pneumatique (12) sur le véhicule (14) ; et
procurer un bloc de sortie de localisation automatique (112, 124, 136, 148, 154) exécuté sur le processeur (46), dans lequel le bloc de sortie de localisation automatique reçoit la position du bandage pneumatique (12) sur le véhicule (14) qui a été déterminée et génère un message qui établit une corrélation entre l'unité (26) faisant office de capteur et la position du bandage pneumatique (12) sur le véhicule (14) ; **caractérisé en ce que**
le procédé comprend en outre le fait de mettre en œuvre au moins un test de Student qui est choisi parmi un test de Student de l'accélération (162) destiné à utiliser des données d'accélération afin de comparer des déterminations de la position qui sont basées sur la longueur de l'empreinte, un test de Student qui se base sur le freinage (172) destiné à utiliser des données de freinage afin de comparer des déterminations de la position qui sont basées sur la longueur de l'empreinte, un test de Student qui se base sur le virage à droite (178) destiné à utiliser des données de virage à droite afin de comparer des déterminations de virage à droite, un test de Student qui se base sur le virage à gauche (184) destiné à utiliser des données de virage à gauche afin de comparer des déterminations de virage à gauche, et un test de Student qui se base sur des indications concernant l'intensité du signal reçu destiné à utiliser des indications concernant l'intensité du signal reçu afin de comparer des déterminations de position.
